# EUROPÄISCHE PATENTSCHRIFT

(11) **EP 3 939 389 B1**
(45) Veröffentlichungstag und Bekanntmachung des Hinweises auf die Patenterteilung: **22.03.2023**
(21) Anmeldenummer: 20816417.8
(22) Anmeldetag: 24.11.2020
(51) Int. Cl.: G05B 19/042, H04L 12/40, H04L 41/0853, H04L 41/0866, H04L 43/028

(54) **KONFIGURATIONSMANAGEMENT FÜR AVIONIKNETZWERK UND VERFAHREN ZUM ÜBERPRÜFEN DER KONFIGURATION EINES AVIONIKNETZWERKS**
CONFIGURATION MANAGEMENT FOR AVIONICS NETWORK, AND METHOD FOR CHECKING THE CONFIGURATION OF AN AVIONICS NETWORK
GESTION DE CONFIGURATION POUR UN RÉSEAU AVIONIQUE, ET PROCÉDÉ DE VÉRIFICATION DE LA CONFIGURATION D'UN RÉSEAU AVIONIQUE

(30) Priorität: 29.11.2019 DE 102019218574
(43) Veröffentlichungstag der Anmeldung: 19.01.2022
(73) Patentinhaber: Airbus Operations GmbH, 21129 Hamburg (DE)
(72) Erfinder: POULAIN, Stéphane, 21129 Hamburg (DE); KLIEM, Daniel, 21129 Hamburg (DE); SCHLIWA, Ralf, 21129 Hamburg (DE); CARMONA-PUGA, Guillermo, 21129 Hamburg (DE); VOLLSTEDT, Thomas, 21129 Hamburg (DE)
(74) Vertreter: Isarpatent
(86) Internationale Anmeldenummer: PCT/EP2020/083262
(87) Internationale Veröffentlichungsnummer: WO 2021/105151

(56) Entgegenhaltungen:
- EP-A2- 1 426 870
- WO-A1-2017/025249
- WO-A2-2007/059322
- US-A1- 2014 337 616
- US-B1- 8 589 020
- US-B1- 10 078 955
- US-B2- 8 683 266

## Beschreibung

### TECHNISCHES GEBIET DER ERFINDUNG

Die Erfindung betrifft ein Avioniknetzwerk, d.h. ein Datennetzwerk für den Einsatz in Avionikanwendungen, mit einem integrierten Konfigurationsmanagement sowie ein Verfahren zum Überprüfen der Konfiguration eines Avioniknetzwerks.

### TECHNISCHER HINTERGRUND

In technisch komplexen mobilen Verkehrsplattformen, wie etwa Automobilen, Zügen, Schiffen oder Flugzeugen wird üblicherweise eine große Vielzahl verschiedener und verschieden stark integrierter elektronischer Komponenten eingesetzt. Solche elektronischen Komponenten sind beispielsweise Steuersysteme, Sensorsysteme, Computersysteme, Netzwerkknoten oder andere für den Betrieb der Verkehrsplattform notwendige technische Geräte.

Um Änderungen in der Konfiguration derartiger Komponentennetze und deren Netzumgebung adäquat überwachen und dokumentieren zu können, sind nicht minder komplexe Überprüfungsschemata notwendig, mit Hilfe derer zwischen autorisierten und potentiell nicht autorisierten Konfigurationsmodifikationen zuverlässig und zeitnah unterschieden werden kann.

Die Druckschrift US 2019/0325664 A1 offenbart computer-implementierte Verfahren zur Charakterisierung von Konfigurationen von Verkehrsplattformen. Die Druckschrift US 9,384,601 B2 offenbart ein Verfahren zum Überprüfen der Leistungsfähigkeit einer Flugzeugkomponente. Die Druckschrift US 8,793,026 B2 offenbart ein Lebensdauermanagement für elektrische Lasten in einem Flugzeug. Die Druckschrift US 2013/0036103 A1 offenbart ein System zum Validieren von Softwarekomponenten in einem Flugzeug. Die Druckschrift US 8,683,266 B2 offenbart Systeme und Verfahren zur Konfigurationsvalidierung komplexer Multi-Agenten-Systeme an Bord von Flugzeugen. Die Druckschrift EP 1426870 A2 offenbart ein Avioniknetzwerk gemäß dem Oberbegriff von Anspruch 1 sowie ein Verfahren zur Überprüfung der Konfiguration eines Avioniknetzwerks gemäß dem Oberbegriff von Anspruch 11.

### ZUSAMMENFASSUNG DER ERFINDUNG

Eine der Aufgaben der Erfindung besteht darin, verbesserte Lösungen für die zuverlässige, sichere und einfache Überprüfung von Konfigurationen von Avioniknetzwerken zu finden.

Diese und andere Aufgaben werden durch ein Avioniknetzwerk mit den Merkmalen des Anspruchs 1, ein Flugzeug mit einem Avioniknetzwerk mit den Merkmalen des Anspruchs 10 sowie durch ein Verfahren zum Überprüfen der Konfiguration eines Avioniknetzwerks mit den Merkmalen des Anspruchs 11 gelöst.

Gemäß einem ersten Aspekt der Erfindung umfasst ein Avioniknetzwerk eine Vielzahl von Avionikkomponenten und eine Konfigurationsüberwachungseinrichtung, welche mit der Vielzahl von Avionikkomponenten drahtgebunden oder drahtlos verbunden ist. Die Konfigurationsüberwachungseinrichtung weist dabei mindestens eine Konfigurationsdatenschnittstelle auf, welche dazu ausgelegt ist, eine Vielzahl von den Betriebszustand der Avionikkomponenten charakterisierenden Konfigurationsparametern zu empfangen. Ferner weist die Konfigurationsüberwachungseinrichtung eine Parameterfiltereinrichtung auf, welche mit der mindestens einen Konfigurationsdatenschnittstelle verbunden ist, und welche dazu ausgelegt ist, eine Teilmenge der empfangenen Konfigurationsparameter zu filtern. Außerdem weist die Konfigurationsüberwachungseinrichtung einen Referenzparameterspeicher, welcher dazu ausgelegt ist, Sätze von Referenzwerten für Konfigurationsparameter zu speichern, und eine Parameterabgleicheinrichtung auf, welche mit dem Referenzparameterspeicher und der Parameterfiltereinrichtung gekoppelt ist, und welche dazu ausgelegt ist, die von der Parameterfiltereinrichtung gefilterte Teilmenge der empfangenen Konfigurationsparameter mit einem in dem Referenzparameterspeicher gespeicherten Satz von Referenzwerten für die Konfigurationsparameter zu vergleichen.

Gemäß einem zweiten Aspekt der Erfindung umfasst ein Flugzeug ein Avioniknetzwerk gemäß dem ersten Aspekt der Erfindung.

Gemäß einem dritten Aspekt der Erfindung umfasst ein Verfahren zum Überprüfen der Konfiguration eines Avioniknetzwerks die Schritte des Ermittelns einer Vielzahl von Konfigurationsparametern, welche einen Betriebszustand einer Vielzahl von Avionikkomponenten charakterisieren, des Übermittelns der Vielzahl von Konfigurationsparametern an eine Konfigurationsdatenschnittstelle einer Konfigurationsüberwachungseinrichtung, des Filterns einer Teilmenge der empfangenen Konfigurationsparameter in einer Parameterfiltereinrichtung der Konfigurationsüberwachungseinrichtung, und des Abgleichens, durch eine Parameterabgleicheinrichtung der Konfigurationsüberwachungseinrichtung, der von der Parameterfiltereinrichtung gefilterten Teilmenge der empfangenen Konfigurationsparameter mit einem in einem Referenzparameterspeicher der Konfigurationsüberwachungseinrichtung gespeicherten Satz von Referenzwerten für die Konfigurationsparameter.

Ein besonderer Vorteil in den erfindungsgemäßen Lösungen besteht darin, dass in einem Kabinenmanagementsystem mit in einem drahtgebundenen oder drahtlosen Netzwerkverbund zusammengeschlossenen Avionikkomponenten als Netzwerkteilnehmern die tatsächliche Konfiguration der individuellen Komponenten sowie die daraus resultierende Konfiguration des gesamten Netzwerks dynamisch und zeitnah ermittelt werden kann. Dabei kann das Kabinenmanagementsystem gemessene oder voreingestellte Konfigurationsparameter aller Komponenten sammeln und zu einem oder mehreren Fingerabdrücken des aktuellen Konfigurationszustandes zusammenfassen, die für die jeweilige Zusammenstellung des Avioniknetzwerks eineindeutig sind.

Bei Avioniknetzwerken mit einer hohen Anzahl an Komponenten ist die Anzahl an zu ermittelnden und in die Überprüfung miteinzubeziehenden Parameter unverhältnismäßig hoch.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des Avioniknetzwerks kann das Avioniknetzwerk weiterhin eine Filtersteuereinrichtung aufweisen, welche mit der Parameterfiltereinrichtung gekoppelt ist, und welche dazu ausgelegt ist, Selektionseinstellungen der Parameterfiltereinrichtung zur Selektion der in der gefilterten Teilmenge der empfangenen Konfigurationsparameter dynamisch zu ändern.

Gemäß einigen weiteren Ausführungsformen des Avioniknetzwerks kann die Filtersteuereinrichtung weiterhin mit der Parameterabgleicheinrichtung gekoppelt und dazu ausgelegt sein, die Selektionseinstellungen der Parameterfiltereinrichtung in Abhängigkeit von einem Selektionssteuersignal der Parameterabgleicheinrichtung zu ändern.

Gemäß einigen weiteren Ausführungsformen des Avioniknetzwerks kann die Parameterfiltereinrichtung mindestens zwei sequentiell angeordnete Parameterfilterstufen aufweisen, so dass eine erste der mindestens zwei sequentiell angeordneten Parameterfilterstufen eine Vorfilterung der empfangenen Konfigurationsparameter durchführt, und eine zweite der mindestens zwei sequentiell angeordneten Parameterfilterstufen die vorgefilterten empfangenen Konfigurationsparameter zur Ausgabe der gefilterten Teilmenge der empfangenen Konfigurationsparameter nachfiltert.

Gemäß einigen weiteren Ausführungsformen des Avioniknetzwerks kann die Filtersteuereinrichtung mit jeder der mindestens zwei sequentiell angeordneten Parameterfilterstufen gekoppelt und dazu ausgelegt sein, Selektionseinstellungen der mindestens zwei sequentiell angeordneten Parameterfilterstufen zur Vorfilterung und Nachfilterung dynamisch und unabhängig voneinander zu ändern.

Gemäß einigen weiteren Ausführungsformen des Avioniknetzwerks können ein oder mehrere der Vielzahl von Avionikkomponenten ein drahtloses Kommunikationsmodul aufweisen, welches dazu ausgelegt ist, Konfigurationsparameter drahtlos an eine drahtlose Konfigurationsdatenschnittstelle der Konfigurationsüberwachungseinrichtung zu übermitteln.

Gemäß einigen weiteren Ausführungsformen des Avioniknetzwerks können die empfangenen Konfigurationsparameter Identifikationsnummern der Avionikkomponenten, Sicherheitszertifikate der Avionikkomponenten, Leistungsaufnahmeprofile der Avionikkomponenten, Netzwerkverkehrsprofile der Avionikkomponenten, Dämpfungswerte der Verkabelung der Avionikkomponenten und/oder Einbauposition der Avionikkomponenten in einem Flugzeug aufweisen.

Gemäß einigen weiteren Ausführungsformen des Avioniknetzwerks können die Avionikkomponenten Kabinenmanagementgeräte, Flugzeugkabinenmonumente, Flugzeugkabinenbeleuchtungselemente, Flugzeugsitzelektronikgeräte, Kabinendisplays, Bordkücheneinrichtungsgeräte, Kabinenaudioanlagen und/oder Passagier-Serviceeinheiten aufweisen.

Gemäß einigen Ausführungsformen des Verfahrens kann das Verfahren weiterhin den Schritt des Änderns der Selektionseinstellungen der Parameterfiltereinrichtung zur Selektion der in der gefilterten Teilmenge der empfangenen Konfigurationsparameter durch eine Filtersteuereinrichtung der Konfigurationsüberwachungseinrichtung aufweisen.

Gemäß einigen weiteren Ausführungsformen des Verfahrens kann das Ändern der Selektionseinstellungen der Parameterfiltereinrichtung in Abhängigkeit von einem Selektionssteuersignal der Parameterabgleicheinrichtung erfolgen.

Gemäß einigen weiteren Ausführungsformen des Verfahrens kann die Parameterfiltereinrichtung mindestens zwei sequentiell angeordnete Parameterfilterstufen aufweisen, so dass das Filtern der Teilmenge der empfangenen Konfigurationsparameter eine Vorfilterung der empfangenen Konfigurationsparameter in einer ersten der mindestens zwei sequentiell angeordneten Parameterfilterstufen und eine Nachfilterung der vorgefilterten empfangenen Konfigurationsparameter in einer zweiten der mindestens zwei sequentiell angeordneten Parameterfilterstufen zur Ausgabe der gefilterten Teilmenge der empfangenen Konfigurationsparameter umfasst.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines Avioniknetzwerks mit integriertem Konfigurationsmanagement gemäß einer Ausführungsform der Erfindung;
Fig. 2 eine Illustration eines Flugzeugs mit einem Avioniknetzwerk nach Fig. 1 gemäß einer Ausführungsform der Erfindung; und
Fig. 3 ein Flussdiagramm eines Verfahrens zum Überprüfen einer Konfiguration eines Avioniknetzwerks gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

In der folgenden Beschreibung wird auf Avioniknetzwerke Bezug genommen. "Avioniknetzwerke" im Sinne der vorliegenden Beschreibung umfassen jegliche Art von Netzwerken, bei denen vernetzte Elektronikkomponenten, insbesondere elektrische und elektronische Geräte an Bord eines Fluggerätes, einschließlich der elektronischen Fluginstrumente, über ein gemeinsames Datenaustauschprotokoll für Avionikanwendungen relevante Daten untereinander austauschen können.

Derartige vernetzte Elektronikkomponenten können beispielsweise Flugkontroll- und Managementsysteme, Flugsteuerungssysteme, Flugüberwachungsgeräte, Kollisionswarnsystem, Interkommunikationssysteme, Flugfunksysteme, Navigationssysteme, Instrumentenlandesysteme, globale Navigationssatellitensysteme, Trägheitsnavigationsysteme, Sensorsystem, Radarsystem sowie jegliche Art von Kabinen- und Cargomodule, wie etwa Galleykomponenten, Staufachkomponenten, intelligente Licht- und Anzeigeeinrichtungen, Sitzbedieneinrichtungen, Sanitärbereichssteuerungen, Bordentertainmentsysteme, Kabinenmanagementgeräte, Flugzeugkabinenmonumente, Flugzeugkabinenbeleuchtungselemente, Flugzeugsitzelektronikgeräte, Kabinendisplays, Bordkücheneinrichtungsgeräte, Kabinenaudioanlagen und/oder Passagier-Serviceeinheiten und dergleichen aufweisen.

Konfigurationsparameter im Sinne der vorliegenden Beschreibung umfassen jegliche Art von messbaren oder voreinstellbaren Charakterisierungsmerkmalen, die grundsätzlich dazu geeignet sind, eine bestimmte Avionikkomponente oder einen bestimmten Typ von Avionikkomponenten durch ihren Dateninhalt von anderen Avionikkomponenten oder anderen Typen von Avionikkomponenten unterscheidbar zu machen. Konfigurationsparameter im Sinne der vorliegenden Beschreibung können insbesondere Identifikationsnummern, Sicherheitszertifikate, MAC-Adressen, IP-Adressen, Seriennummern, Versionsbezeichnungen, Zulassungsdaten, Leistungsaufnahmeprofile, Netzwerkverkehrsprofile, Gesamtbetriebsdauern oder auch Dämpfungswerte der Verkabelung der Avionikkomponenten umfassen. Es kann auch möglich sein, den Avionikkomponenten extrinsische Merkmale wie etwa Einbauposition in einem Flugzeug oder auch Zusammenschaltung mit anderen Komponenten in einem Flugzeug zuzuschreiben.

Einige der Konfigurationsparameter erlauben eine Diskretisierung ihrer Parameterinhalte und können daher als "präzise" Parameter bezeichnet werden. Andere Konfigurationsparameter wiederum haben kontinuierliche Spektren von Parameterinhalten und können nur als "unscharfe" Parameter bezeichnet werden. Grundsätzlich sind präzise Parameter besser geeignet, eine Unterscheidbarkeit einer Avionikkomponente gegenüber anderen, ähnlichen Avionikkomponenten herzustellen, wobei unscharfe Parameter aufgrund der hohen Anzahl potentieller Parameterinhalte für den zeitlichen Verlauf des Zustand einer einzelnen Avionikkomponente trennschärfer sein können als präzise Parameter.

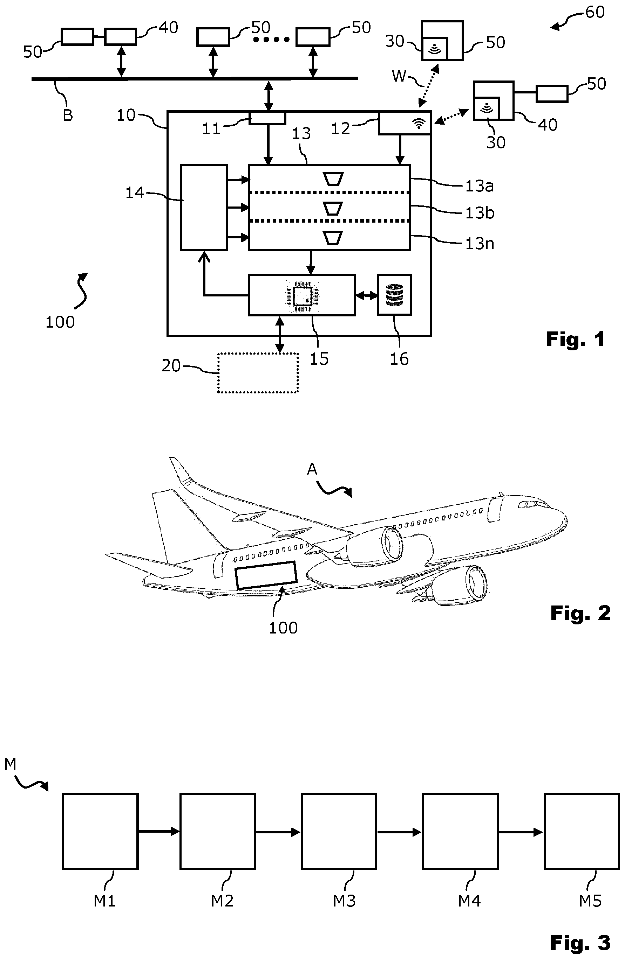

Fig. 1 zeigt eine beispielhafte schematische Illustration eines Avioniknetzwerks 100 in Blockschaubilddarstellung. Das Avioniknetzwerk 100 kann beispielsweise in einem Flugzeug eingesetzt eingesetzt werden, wie zum Beispiel einem in Fig. 2 beispielhaft dargestellten Flugzeug A. Dabei kann das Avioniknetzwerk 100 über ein (nicht explizit dargestelltes) Gateway an Bord des Flugzeugs A an andere Netzwerke in dem Flugzeug A angekoppelt werden.

Das Avioniknetzwerk 100 weist eine Anzahl von Avionikkomponenten 50 als Netzwerkteilnehmer auf. Das Avioniknetzwerk 100 verfügt über ein oder mehrere Datenbussysteme, von denen beispielhaft ein Datenbussystem B explizit in Fig. 1 dargestellt sind. Es sollte klar sein, dass auch mehr oder weniger als zwei Datenbussysteme in dem Avioniknetzwerk 100 verwendet werden können. Die Datenbussysteme B können - wie dargestellt - drahtgebundene Systeme sein, wie etwa AFDX, ARINC 429, ARINC 629, ARINC 717, CAN-Bus, MIL-STD-1553 oder TTP. Es kann alternativ oder zusätzlich dazu auch möglich sein, ein oder mehrere der Avionikkomponenten 50 drahtungebunden miteinander zu koppeln, beispielsweise über ZigBee, WLAN, WiFi, WiMax oder in einem anderen Drahtlosnetzwerk. Dazu können die Avionikkomponenten 50 über drahtlose Kommunikationsmodule 30 verfügen, mithilfe derer der Aufbau einer drahtlosen Kommunikationsverbindung W möglich ist.

Die Avionikkomponenten 50 verfügen jeweils über ein oder mehrere Netzwerkschnittstellen, über die sie untereinander und/oder mit dem Datenbussystem B gekoppelt sind. Die Avionikkomponenten 50 können jedwede Art von anzusteuernden elektrischen oder elektronischen Einheiten an Bord eines Flugzeugs, wie etwa Lichtmodule, Leuchten, Anzeigeeinrichtungen, Küchenmodule, Sitzbedienelemente, Kabinenmanagementgeräte, Flugzeugkabinenmonumente, Flugzeugkabinenbeleuchtungselemente, Flugzeugsitzelektronikgeräte, Kabinendisplays, Bordkücheneinrichtungsgeräte, Kabinenaudioanlagen, Passagier-Serviceeinheiten oder dergleichen umfassen. Es kann in manchen Fällen vorgesehen sein, dass externe Messsysteme 40 für ein oder mehrere der Avionikkomponenten 50 vorhanden sind, um Konfigurationsparameter durch externe Detektion für die jeweiligen Avionikkomponenten 50 zu ermitteln. In diesem Fall können die externen Messsysteme 40 mit dem Datenbus gekoppelt werden oder alternativ über ein drahtloses Kommunikationsmodul 30 verfügen.

Die Avionikkomponenten 50 können beispielsweise über einen Prozessor verfügen, dessen Konfiguration durch einen zentralen Konfigurationsserver des Avioniknetzwerks gemäß der gewünschten Funktionalität vorgebbar ist. Zudem können die Avionikkomponenten 50 optional über Eingabe-/Ausgabegeräte sowie Displayeinrichtungen für die Bedienung durch einen Nutzer verfügen. Die Konfiguration des Prozessors der Avionikkomponenten 50 kann in einem Konfigurationsspeicher der jeweiligen Avionikkomponente 50 abgelegt sein, welcher mit dem Prozessor operativ verbunden ist. Die Dienste für den Prozessor sind in Software implementiert, die gemäß einem Software Development Kit (SDK) mit einem gemeinsamen Meta-Data-Standard (Dictionary) aufgerufen und ausgeführt werden kann.

Durch die Variabilität der Avionikkomponenten 50 bezüglich ihrer anpassbaren Funktionalität können die Avionikkomponenten 50 eine hohe Vielzahl von möglichen Betriebszuständen bzw. Konfigurationszuständen einnehmen. Katalysiert durch eine große Anzahl von Avionikkomponenten 50 kann ein Avioniknetzwerk 100 daher eine unüberschaubare Anzahl von Netzwerkzuständen insgesamt aufweisen, die jeweils Kombinationen und Subkombinationen verschiedener der

Das Avioniknetzwerk 100 verfügt über einen zentrale Konfigurationsüberwachungseinrichtung 10, welcher dazu ausgelegt ist, die Avionikkomponenten 50 hinsichtlich ihrer Konfiguration zu überprüfen und und zu überwachen. Dazu kann die zentrale Konfigurationsüberwachungseinrichtung 10 mindestens eine Konfigurationsdatenschnittstelle aufweisen, welche dazu ausgelegt ist, eine Vielzahl von den Betriebszustand der Avionikkomponenten 50 charakterisierenden Konfigurationsparametern über einen drahtgebunden oder drahtlosen Datenkommunikationskanal zu empfangen. Die Konfigurationsparameter können beispielsweise Identifikationsnummern der Avionikkomponenten 50, Sicherheitszertifikate der Avionikkomponenten 50, Leistungsaufnahmeprofile der Avionikkomponenten 50, Netzwerkverkehrsprofile der Avionikkomponenten 50, Dämpfungswerte der Verkabelung der der Avionikkomponenten 50 und/oder Einbauposition der Avionikkomponenten 50 in einem Flugzeug A sein. Grundsätzlich können die Konfigurationsparameter in Parameter mit für die Avionikkomponente 50 eineindeutigen und unveränderlichen Parameterinhalten einerseits und in Parameter variablen, zeitlich veränderbaren und zustandsabhängigen Parameterinhalts unterteilt werden.

Die Konfigurationsdatenschnittstelle kann beispielsweise eine kabelgebundene Datenbusschnittstelle 11 sein, die mit einem oder mehreren Datenbussen des Avioniknetzwerks 100 gekoppelt ist. Alternativ dazu kann die Konfigurationsdatenschnittstelle ein drahtloses Kommunikationsmodul 12 umfassen, welches dazu ausgelegt ist, mit verschiedenen drahtlosen Kommunikationsmodulen 30 in der Umgebung einen drahtlose Datenkommunikation zu unterhalten.

Zum Abgleich einer tatsächlichen Gesamtkonfiguration der Avionikkomponenten 50 eines Avioniknetzwerks 100 weist die Konfigurationsüberwachungseinrichtung 10 einen Referenzparameterspeicher 16 auf. Der Referenzparameterspeicher 16 kann beispielsweise ein Flashspeicher, eine Speicherkarte, eine Festplatte, ein EEPROM oder eine andere Art von Hardwarespeicher sein, in dem Daten temporär oder dauerhaft sowie auslesbar abgelegt werden können. In diesem Referenzparameterspeicher 16 können ein oder mehrere Sätze von Referenzwerten für Konfigurationsparameter zu speichern. Diese Sätze von Referenzwerten können beispielsweise von extern vorgegeben werden oder es können aktuelle Konfigurationen ermittelt werden und deren Konfigurationsparameter als Referenzwerte freigegeben werden.

Der Referenzparameterspeicher 16 ist mit einer Parameterabgleicheinrichtung 15 gekoppelt. Die Parameterabgleicheinrichtung 15 erhält die Konfigurationsparameter, die von den Avionikkomponenten 50 ermittelt werden, um diese Konfigurationsparameter mit einem der in dem Referenzparameterspeicher 16 gespeicherten Sätze von Referenzwerten für die Konfigurationsparameter zu vergleichen. In Abhängigkeit von dem Resultat dieses Abgleichs kann die Parameterabgleicheinrichtung 15 ein Abgleichsignal ausgeben, welches beispielsweise einem Nutzer über ein externes Bedien- oder Anzeigegerät 20 ausgegeben werden kann.

Damit die Parameterabgleicheinrichtung 15 nicht alle ermittelten oder ermittelbaren Konfigurationsparameter für den Abgleich berücksichtigen muss, ist erfindungsgemäß zwischen der bzw. Konfigurationsdatenschnittstelle(n) 11 und 12 und der Parameterabgleicheinrichtung 15 eine Parameterfiltereinrichtung 13 gekoppelt. Mittels der Parameterfiltereinrichtung 13 kann eine Teilmenge der empfangenen Konfigurationsparameter aus der Gesamtmenge aller ermittelten Konfigurationsparameter herausgefiltert werden, so dass der Parameterabgleicheinrichtung 15 von der Parameterfiltereinrichtung 13 nur eine gefilterte Teilmenge der empfangenen Konfigurationsparameter übermittelt. Diese gefilterte Teilmenge wird dann in der Parameterabgleicheinrichtung mit einem in dem Referenzparameterspeicher 16 gespeicherten Satz von Referenzwerten für die Konfigurationsparameter verglichen.

Damit die Auswahl derjenigen Konfigurationsparameter, die in die gefilterte Teilmenge einfließen sollen, dynamisch angepasst werden kann, kann die Konfigurationsüberwachungseinrichtung 10 eine Filtersteuereinrichtung 14 aufweien, welche mit der Parameterfiltereinrichtung 13 gekoppelt ist. Die Filtersteuereinrichtung 14 kann beispielsweise über eine externe Nutzereingabe oder über ein rückgekoppeltes Selektionssteuersignal der Parameterabgleicheinrichtung 15 Selektionseinstellungen der Parameterfiltereinrichtung 13 zur Selektion der in der gefilterten Teilmenge der von der bzw. den Konfigurationsdatenschnittstelle(n) 11 und 12 empfangenen Konfigurationsparameter dynamisch ändern.

Beispielsweise kann die Filtersteuereinrichtung 14 solche Konfigurationsparameter zur Filterung in der Parameterfiltereinrichtung 13 auswählen, die eine möglichst hohe Aussagekraft über potentielle Änderungen in der Gesamtkonfiguration der Avionikkomponenten 50 aufweisen. Eine derartige Aussagekraft kann beispielsweise über die Hamming-Distanz zwischen dem Satz an ermittelten Konfigurationsparametern und dem Vergleichssatz an Referenzwerten quantifiziert werden. Dazu kann die Filtersteuereinrichtung 14 mögliche Kombinationen an Konfigurationsparametern zur Bildung von verschiedenen Teilmengen in Karnaugh-Veitch-Diagrammen oder Quine-McCluskey-Tabellen abbilden, um disjunktive Normalformen für verschiedene Subgruppen von Konfigurationsparametern zu finden.

Unter der Randbedingung einer Maximalzahl von zu berücksichtigenden Konfigurationsparameter kann auf der Basis der für eine Charakterisierung des Gesamtzustandes des Avioniknetzwerks 100 am geeignetsten befundenen Teilmenge an Konfigurationsparameter die Selektionseinstellung der Parameterfiltereinrichtung 13 angepasst werden.

Weiterhin kann es möglich sein, dass die Parameterabgleicheinrichtung 15 eine Trennschärfe der aktuell gefilterten Teilmenge an ermittelten Konfigurationsparametern zur Unterscheidung zwischen erwünschten und unerwünschten Gesamtkonfigurationszuständen berechnet. Diese Trennschärfe kann über ein Selektionssteuersignal der Parameterabgleicheinrichtung 15 an die Filtersteuereinrichtung 14 rückgekoppelt werden, um die Selektionseinstellungen empirisch an die gewünschten Abgleichsqualität adaptieren zu können.

Für eine feinere Granularität und höher Flexibilität der Filterung kann die Parameterfiltereinrichtung 13 mindestens zwei sequentiell angeordnete Parameterfilterstufen 13a, 13b, 13n aufweisen. Im Beispiel der Fig. 1 sind drei solcher Parameterfilterstufen dargestellt, wobei klar sein sollte, dass zwei oder mehr als drei Parameterfilterstufen ebenso möglich sind. Eine erste der mindestens zwei sequentiell angeordneten Parameterfilterstufen 13a führt dann eine Vorfilterung der empfangenen Konfigurationsparameter durch. Die vorgefilterten Konfigurationsparameter werden an eine nachfolgende, zweite der mindestens zwei sequentiell angeordneten Parameterfilterstufen 13b abgegeben, die die vorgefilterten empfangenen Konfigurationsparameter zur Ausgabe der gefilterten Teilmenge der empfangenen Konfigurationsparameter entsprechend nachfiltert.

Die Filtersteuereinrichtung 14 kann für jede der sequentiell angeordneten Parameterfilterstufen 13a, 13b, 13n separat und unabhängig voneinander Selektionseinstellungen für die gewünschte Vorfilterung und Nachfilterung dynamisch modifizieren. Beispielsweise kann die Feinheit der Nachfilterung von der Art der Konfigurationsparameter in der Vorfilterstufe abhängig gemacht werden. Insbesondere kann die Art der Vorfilterung beispielsweise von der Anzahl jeweils gleichartiger Avionikkomponenten 50 in dem Netzwerk abhängig gemacht werden.

Fig. 3 zeigt ein Verfahren M zum Überprüfen einer Konfiguration von Avionikkomponenten in einem Avioniknetzwerk, insbesondere für die Nutzung in einem Flugzeug. Das Verfahren M kann beispielsweise in einem Avioniknetzwerk 100 wie in Fig. 1 dargestellt angewandt werden. Dabei kann das Verfahren M unter Zuhilfenahme der im Zusammenhang mit Fig. 1 erläuterten Komponenten eines Avioniknetzwerks 100 implementiert werden. Ferner kann das Verfahren M in einem im Zusammenhang mit Fig. 2 erläuterten Flugzeug A genutzt werden.

Das Verfahren M weist als ersten Schritt M1 ein Ermitteln einer Vielzahl von Konfigurationsparametern auf. Die ermittelten Konfigurationsparameter charakterisieren dabei einen Betriebs- bzw. Konfigurationszustand einer Vielzahl von Avionikkomponenten 50. In einem zweiten Schritt M2 wird die Vielzahl von Konfigurationsparametern an eine Konfigurationsdatenschnittstelle einer Konfigurationsüberwachungseinrichtung 10 in einem Avioniknetzwerk 100 übermittelt.

In einem Schritt M4 wird eine Teilmenge der empfangenen Konfigurationsparameter in einer Parameterfiltereinrichtung 13 der Konfigurationsüberwachungseinrichtung 10 aus der Gesamtheit der Konfigurationsparameter herausgefiltert. Dies kann beispielsweise erfolgen, indem die Parameterfiltereinrichtung 13 mindestens zwei sequentiell angeordnete Parameterfilterstufen 13a, 13b, 13n aufweist. In der ersten Parameterfilterstufe 13a kann eine Vorfilterung der empfangenen Konfigurationsparameter erfolgen. Die vorgefilterten Konfigurationsparameter werden dann über eine Nachfilterung in einer nachgelagerten zweiten Parameterfilterstufe weiter gefiltert, um die Teilmenge der empfangenen Konfigurationsparameter an der letzten Parameterfilterstufe ausgeben zu können.

Die Selektionseinstellungen der Parameterfiltereinrichtung 13 oder der einzelnen Parameterfilterstufen 13a, 13b, 13n zur Selektion der in der gefilterten Teilmenge enthaltenen Konfigurationsparameter können optional in einem Schritt M3 geändert werden, beispielsweise bevor eine Filterung durch die Parameterfiltereinrichtung 13 in Schritt M4 erfolgt. Dies kann über eine Filtersteuereinrichtung 14 bewerkstelligt werden, die programmierbare Steuerkriterien als Maßstab für die Änderung der Selektionseinstellungen anlegen kann. Diese Steuerkriterien können ab initio durch einen Nutzer vorgegeben werden oder alternativ dazu auch in Abhängigkeit von einem Selektionssteuersignal einer Parameterabgleicheinrichtung 15 dynamisch angepasst werden. Insbesondere kann das Selektionssteuersignal der Parameterabgleicheinrichtung 15 als Rückkopplungssignal der Parameterabgleicheinrichtung 15 je nach ermitteltem Inhalt der ausgegebenen Teilmenge der Konfigurationsparameter implementiert werden.

Schließlich wird in einem Schritt M5 ein Abgleich der von der Parameterfiltereinrichtung 13 gefilterten Teilmenge der empfangenen Konfigurationsparameter mit einem in einem Referenzparameterspeicher 16 gespeicherten Satz von Referenzwerten für die Konfigurationsparameter durch die Parameterabgleicheinrichtung 15 vorgenommen. Dieser Abgleich dient der Überprüfung, ob die Konfiguration der Gesamtheit der Avionikkomponenten 50, von denen die Konfigurationsparameter ermittelt worden sind, einer zu erwartenden oder einer gewünschten Konfiguration entsprechen. Demgemäß kann das Ergebnis des Abgleichs an einer Schnittstelle der Parameterabgleicheinrichtung 15 an ein externes Nutzergerät 20, wie etwa ein Tablet, eine Anzeigevorrichtung oder ein persönliches elektronisches Gerät zur Kenntnisnahme durch einen Nutzer ausgegeben werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Avioniknetzwerk (100), umfassend:
eine Vielzahl von Avionikkomponenten (50); und
eine Konfigurationsüberwachungseinrichtung (10), welche mit der Vielzahl von Avionikkomponenten (50) drahtgebunden oder drahtlos verbunden ist, und welche aufweist:
mindestens eine Konfigurationsdatenschnittstelle (11; 12), welche dazu ausgelegt ist, eine Vielzahl von den Betriebszustand der Avionikkomponenten (50) charakterisierenden Konfigurationsparametern zu empfangen;
einen Referenzparameterspeicher (16), welcher dazu ausgelegt ist, Sätze von Referenzwerten für Konfigurationsparameter zu speichern; und
eine Parameterabgleicheinrichtung (15);
**dadurch gekennzeichnet, dass** die Konfigurationsüberwachungseinrichtung (10) weiter aufweist:
eine Parameterfiltereinrichtung (13), welche mit der mindestens einen Konfigurationsdatenschnittstelle (11; 12) verbunden ist, und welche dazu ausgelegt ist, eine Teilmenge von Konfigurationsparametern aus der empfangenen Vielzahl von Konfigurationsparametern herauszufiltern, wobei die Konfigurationsparameter der Teilmenge selektiert sind, um ein Ermitteln einer Gesamtkonfiguration des Avioniknetzwerks (100) zu ermöglichen;
wobei die Parameterabgleicheinrichtung (15) mit dem Referenzparameterspeicher (16) und der Parameterfiltereinrichtung (13) gekoppelt ist und dazu ausgelegt ist, die von der Parameterfiltereinrichtung (13) herausgefilterte Teilmenge von Konfigurationsparametern mit einem in dem Referenzparameterspeicher (16) gespeicherten Satz von Referenzwerten für die Konfigurationsparameter der Teilmenge abzugleichen, um die Gesamtkonfiguration des Avioniknetzwerks (100) zu ermitteln.

2. Avioniknetzwerk (100) gemäß Anspruch 1, weiterhin umfassend:
eine Filtersteuereinrichtung (14), welche mit der Parameterfiltereinrichtung (13) gekoppelt ist, und welche dazu ausgelegt ist, Selektionseinstellungen der Parameterfiltereinrichtung (13) zum Selektieren der Konfigurationsparameter, die in die Teilmenge einfließen, dynamisch zu ändern.

3. Avioniknetzwerk (100) gemäß Anspruch 2, wobei die Filtersteuereinrichtung (14) weiterhin mit der Parameterabgleicheinrichtung (15) gekoppelt ist und dazu ausgelegt ist, die Selektionseinstellungen der Parameterfiltereinrichtung (13) in Abhängigkeit von einem Selektionssteuersignal der Parameterabgleicheinrichtung (15) zu ändern.

4. Avioniknetzwerk (100) gemäß Anspruch 3, wobei die Parameterabgleicheinrichtung (15) dazu eingerichtet ist eine Trennscharfe der aktuell gefilterten Teilmenge an ermittelten Konfigurationsparametern zum Unterscheiden zwischen erwünschten und unerwünschten Gesamtkonfigurationszuständen des Avioniknetzwerks (100) zu berechnen, um diese Trennschärfe über das Selektionssteuersignal an die Filtersteuereinrichtung (14) rückzukoppeln.

5. Avioniknetzwerk (100) gemäß einem der Ansprüche 2 bis 4, wobei die Parameterfiltereinrichtung (13) mindestens zwei sequentiell angeordnete Parameterfilterstufen (13a; 13b; 13n) aufweist, so dass eine erste Parameterfilterstufe der mindestens zwei sequentiell angeordneten Parameterfilterstufen (13a; 13b; 13n) eine Vorfilterung der empfangenen Konfigurationsparameter durchführt, und eine zweite Parameterfilterstufe der mindestens zwei sequentiell angeordneten Parameterfilterstufen (13a; 13b; 13n) die vorgefilterten empfangenen Konfigurationsparameter zur Ausgabe der herausgefilterten Teilmenge von Konfigurationsparametern nachfiltert.

6. Avioniknetzwerk (100) gemäß Anspruch 5, wobei die Filtersteuereinrichtung (14) mit jeder Parameterfilterstufe der mindestens zwei sequentiell angeordneten Parameterfilterstufen (13a; 13b; 13n) gekoppelt ist und dazu ausgelegt ist, Selektionseinstellungen der mindestens zwei sequentiell angeordneten Parameterfilterstufen (13a; 13b; 13n) zur Vorfilterung und Nachfilterung dynamisch und unabhängig voneinander zu ändern.

7. Avioniknetzwerk (100) gemäß einem der Ansprüche 1 bis 6, wobei eine oder mehrere Avionikkomponenten (50) der Vielzahl von Avionikkomponenten (50) ein drahtloses Kommunikationsmodul (30) aufweisen, welches dazu ausgelegt ist, Konfigurationsparameter drahtlos an eine drahtlose Konfigurationsdatenschnittstelle (12) der Konfigurationsüberwachungseinrichtung (10) zu übermitteln.

8. Avioniknetzwerk (100) gemäß einem der Ansprüche 1 bis 7, wobei die empfangenen Konfigurationsparameter Identifikationsnummern der Avionikkomponenten (50), Sicherheitszertifikate der Avionikkomponenten (50), Leistungsaufnahmeprofile der Avionikkomponenten (50), Netzwerkverkehrsprofile der Avionikkomponenten (50), Dämpfungswerte der Verkabelung der Avionikkomponenten (50) und/oder Einbauposition der Avionikkomponenten (50) in einem Flugzeug (A) aufweisen.

9. Avioniknetzwerk (100) gemäß einem der Ansprüche 1 bis 8, wobei die Avionikkomponenten (50) Kabinenmanagementgeräte, Flugzeugkabinenmonumente, Flugzeugkabinenbeleuchtungselemente, Flugzeugsitzelektronikgeräte, Kabinendisplays, Bordkücheneinrichtungsgeräte, Kabinenaudioanlagen und/oder Passagier-Serviceeinheiten aufweisen.

10. Flugzeug (A) mit einem Avioniknetzwerk (100) gemäß einem der Ansprüche 1 bis 9.

11. Verfahren (M) zum Überprüfen der Konfiguration eines Avioniknetzwerks (100), umfassend:
Ermitteln (M1) einer Vielzahl von Konfigurationsparametern, welche einen Betriebszustand einer Vielzahl von Avionikkomponenten (50) charakterisieren; Übermitteln (M2) der Vielzahl von Konfigurationsparametern an eine Konfigurationsdatenschnittstelle (11; 12) einer Konfigurationsüberwachungseinrichtung (10);
**gekennzeichnet durch**
Herausfiltern (M4) einer Teilmenge von Konfigurationsparametern aus der empfangenen Vielzahl Konfigurationsparameter in einer Parameterfiltereinrichtung (13) der Konfigurationsüberwachungseinrichtung (10), wobei die Konfigurationsparameter der Teilmenge selektiert sind, um ein Ermitteln einer Gesamtkonfiguration des Avioniknetzwerks (100) zu ermöglichen; und
Abgleichen (M5), durch eine Parameterabgleicheinrichtung (15) der Konfigurationsüberwachungseinrichtung (10), der von der Parameterfiltereinrichtung (13) herausgefilterten Teilmenge von Konfigurationsparametern mit einem in einem Referenzparameterspeicher (16) der Konfigurationsüberwachungseinrichtung (10) gespeicherten Satz von Referenzwerten für die Konfigurationsparameter der Teilmenge, um die Gesamtkonfiguration des Avioniknetzwerks (100) zu ermitteln.

12. Verfahren (M) gemäß Anspruch 11, weiterhin umfassend:
Ändern (M3), durch eine Filtersteuereinrichtung (14) der Konfigurationsüberwachungseinrichtung (10), der Selektionseinstellungen der Parameterfiltereinrichtung (13) zum Selektieren der Konfigurationsparameter, die in die Teilmenge einfließen.

13. Verfahren (M) gemäß Anspruch 12, wobei das Ändern (M3) der Selektionseinstellungen der Parameterfiltereinrichtung (13) in Abhängigkeit von einem Selektionssteuersignal der Parameterabgleicheinrichtung (15) erfolgt.

14. Verfahren (M) gemäß Anspruch 13, wobei das Abgleichen (M5) ferner ein Berechnen einer Trennscharfe der aktuell gefilterten Teilmenge an ermittelten Konfigurationsparametern zum Unterscheiden zwischen erwünschten und unerwünschten Gesamtkonfigurationszuständen des Avioniknetzwerks (100) umfasst, und das Ändern (M3) ferner ein Rückkoppeln der Trennschärfe über das Selektionssteuersignal an die Filtersteuereinrichtung (14) umfasst.

15. Verfahren (M) gemäß einem der Ansprüche 12 bis 14, wobei die Parameterfiltereinrichtung (13) mindestens zwei sequentiell angeordnete Parameterfilterstufen (13a; 13b; 13n) aufweist, so dass das Filtern (M4) der Teilmenge der empfangenen Konfigurationsparameter eine Vorfilterung der empfangenen Konfigurationsparameter in einer ersten Parameterfilterstufe der mindestens zwei sequentiell angeordneten Parameterfilterstufen (13a; 13b; 13n) und eine Nachfilterung der vorgefilterten empfangenen Konfigurationsparameter in einer zweiten Parameterfilterstufe der mindestens zwei sequentiell angeordneten Parameterfilterstufen (13a; 13b; 13n) zur Ausgabe der herausgefilterten Teilmenge von Konfigurationsparametern umfasst.

## Claims

1. Avionics network (100), comprising:
a multiplicity of avionics components (50); and
a configuration monitoring device (10), which is connected to the multiplicity of avionics components (50) in a wired or wireless manner, and which has:
at least one configuration data interface (11; 12), which is designed to receive a multiplicity of configuration parameters that characterize the operating status of the avionics components (50);
a reference-parameter memory (16), which is designed to store sets of reference values for configuration parameters; and
a parameter comparison device (15);
**characterized in that** the configuration monitoring device (10) furthermore has:
a parameter filter device (13), which is connected to the at least one configuration data interface (11; 12), and which is designed to filter a subset of configuration parameters from the received multiplicity of configuration parameters, wherein the configuration parameters of the subset are selected in order to make it possible to determine an overall configuration of the avionics network (100);
wherein the parameter comparison device (15) is coupled to the reference-parameter memory (16) and the parameter filter device (13), and is designed to compare the subset of configuration parameters, which has been filtered by the parameter filter device (13), with a set of reference values for the configuration parameters of the subset, which is stored in the reference-parameter memory (16), in order to determine the overall configuration of the avionics network (100).

2. Avionics network (100) according to Claim 1, additionally comprising:
a filter control device (14), which is coupled to the parameter filter device (13), and which is designed to dynamically change selection settings for the parameter filter device (13) for selecting the configuration parameters that are incorporated into the subset.

3. Avionics network (100) according to Claim 2, wherein the filter control device (14) is also coupled to the parameter comparison device (15) and is designed to change the selection settings for the parameter filter device (13) depending on a selection control signal from the parameter comparison device (15).

4. Avionics network (100) according to Claim 3, wherein the parameter comparison device (15) is designed to calculate a selectivity of the currently filtered subset of determined configuration parameters in order to distinguish between desirable and undesirable overall configuration statuses of the avionics network (100), in order to feed this selectivity back to the filter control device (14) via the selection control signal.

5. Avionics network (100) according to any of Claims 2 to 4, wherein the parameter filter device (13) has at least two sequentially arranged parameter filter stages (13a; 13b; 13n), so that a first parameter filter stage of the at least two sequentially arranged parameter filter stages (13a; 13b; 13n) pre-filters the received configuration parameters, and a second parameter filter stage of the at least two sequentially arranged parameter filter stages (13a; 13b; 13n) post-filters the pre-filtered received configuration parameters for output of the filtered subset of configuration parameters.

6. Avionics network (100) according to Claim 5, wherein the filter control device (14) is coupled to each parameter filter stage of the at least two sequentially arranged parameter filter stages (13a; 13b; 13n) and is designed to change, dynamically and independently of each other, selection settings for the at least two sequentially arranged parameter filter stages (13a; 13b; 13n) for pre-filtering and post-filtering.

7. Avionics network (100) according to any of Claims 1 to 6, wherein one or more avionics components (50) of the multiplicity of avionics components (50) has a wireless communication module (30), which is designed to transfer configuration parameters wirelessly to a wireless configuration data interface (12) of the configuration monitoring device (10).

8. Avionics network (100) according to any of Claims 1 to 7, wherein the received configuration parameters comprise identification numbers of the avionics components (50), safety certificates of the avionics components (50), power consumption profiles of the avionics components (50), network traffic profiles of the avionics components (50), attenuation values of the cabling of the avionics components (50), and/or position in which the avionics components (50) are installed in an aircraft (A).

9. Avionics network (100) according to any of Claims 1 to 8, wherein the avionics components (50) comprise cabin management apparatuses, aircraft cabin monuments, aircraft cabin lighting elements, aircraft-seat electronic apparatuses, cabin displays, galley appliances, cabin audio equipment, and/or passenger service units.

10. Aircraft (A) having an avionics network (100) according to any of Claims 1 to 9.

11. Method (M) for checking the configuration of an avionics network (100); comprising:
determining (M1) a multiplicity of configuration parameters that characterize an operating status of a multiplicity of avionics components (50);
transferring (M2) the multiplicity of configuration parameters to a configuration data interface (11; 12) of a configuration monitoring device (10);
**characterized by**
filtering (M4) a subset of configuration parameters from the received multiplicity of configuration parameters in a parameter filter device (13) of the configuration monitoring device (10), wherein the configuration parameters of the subset are selected in order to make it possible to determine an overall configuration of the avionics network (100); and
comparing (M5), by means of a parameter comparison device (15) of the configuration monitoring device (10), the subset of configuration parameters, which has been filtered by the parameter filter device (13), with a set of reference values for the configuration parameters of the subset, which is stored in a reference-parameter memory (16) of the configuration monitoring device (10), in order to determine the overall configuration of the avionics network (100).

12. Method (M) according to Claim 11, further comprising:
changing (M3), by means of a filter control device (14) of the configuration monitoring device (10), the selection settings for the parameter filter device (13) for selecting the configuration parameters that are incorporated into the subset.

13. Method (M) according to Claim 12, wherein the changing (M3) of the selection settings for the parameter filter device (13) is performed depending on a selection control signal from the parameter comparison device (15).

14. Method (M) according to Claim 13, wherein the comparing (M5) furthermore comprises calculating a selectivity of the currently filtered subset of determined configuration parameters in order to distinguish between desirable and undesirable overall configuration statuses of the avionics network (100), and the changing (M3) furthermore comprises feeding the selectivity back to the filter control device (14) via the selection control signal.

15. Method (M) according to any of Claims 12 to 14, wherein the parameter filter device (13) has at least two sequentially arranged parameter filter stages (13a; 13b; 13n), so that the filtering (M4) of the subset of the received configuration parameters comprises pre-filtering of the received configuration parameters in a first parameter filter stage of the at least two sequentially arranged parameter filter stages (13a; 13b; 13n), and post-filtering of the pre-filtered received configuration parameters in a second parameter filter stage of the at least two sequentially arranged parameter filter stages (13a; 13b; 13n) for output of the filtered subset of configuration parameters.

## Revendications

1. Réseau avionique (100), comprenant :
une pluralité de composants avioniques (50) ; et
un dispositif de surveillance de configuration (10), lequel est en liaison filaire ou en liaison sans fil avec la pluralité de composants avioniques (50), et lequel possède :
au moins une interface de configuration (11 ; 12), laquelle est conçue pour recevoir une pluralité de paramètres de configuration qui caractérisent l'état de fonctionnement des composants avioniques (50) ;
une mémoire de paramètres de référence (16), laquelle est configurée pour mémoriser des jeux de valeurs de référence pour les paramètres de configuration ; et
un dispositif de comparaison de paramètres (15) ;
**caractérisé en ce que** le dispositif de surveillance de configuration (10) possède en outre :
un dispositif de filtrage des paramètres (13), lequel est relié à l'au moins une interface de configuration (11 ; 12), et lequel est conçu pour extraire par filtrage un sous-ensemble de paramètres de configuration à partir de la pluralité reçue de paramètres de configuration, les paramètres de configuration du sous-ensemble étant sélectionnés de manière à rendre possible une détermination de la configuration totale du réseau avionique (100) ;
le dispositif de comparaison de paramètres (15) étant connecté à la mémoire de paramètres de référence (16) et au dispositif de filtrage des paramètres (13) et étant conçu pour comparer le sous-ensemble de paramètres de configuration extraits par filtrage par le dispositif de filtrage des paramètres (13) avec un jeu de valeurs de référence mémorisées dans la mémoire de paramètres de référence (16) pour les paramètres de configuration du sous-ensemble afin de déterminer la configuration totale du réseau avionique (100).

2. Réseau avionique (100) selon la revendication 1, comprenant en outre :
un dispositif de commande de filtrage (14), lequel est connecté au dispositif de filtrage des paramètres (13), et lequel est conçu pour modifier dynamiquement les réglages de sélection du dispositif de filtrage des paramètres (13) en vue de sélectionner les paramètres de configuration qui sont inclus dans le sous-ensemble.

3. Réseau avionique (100) selon la revendication 2, le dispositif de commande de filtrage (14) étant en outre connecté au dispositif de comparaison de paramètres (15) et étant conçu pour modifier les réglages de sélection du dispositif de filtrage des paramètres (13) en fonction d'un signal de commande de sélection du dispositif de comparaison de paramètres (15).

4. Réseau avionique (100) selon la revendication 3, le dispositif de comparaison de paramètres (15) étant conçu pour calculer une sélectivité du sous-ensemble actuellement filtré de paramètres de configuration déterminés en vue de différencier entre les états de configuration totale souhaités et non souhaités du réseau avionique (100), afin de renvoyer en rétroaction cette sélectivité au dispositif de commande de filtrage (14) par le biais du signal de commande de sélection.

5. Réseau avionique (100) selon l'une des revendications 2 à 4, le dispositif de filtrage des paramètres (13) possédant au moins deux étages de filtrage des paramètres (13a ; 13b ; 13n) disposés séquentiellement, de sorte qu'un premier étage de filtrage des paramètres des au moins deux étages de filtrage des paramètres (13a ; 13b ; 13n) disposés séquentiellement effectue un préfiltrage des paramètres de configuration reçus, et un deuxième étage de filtrage des paramètres des au moins deux étages de filtrage des paramètres (13a ; 13b ; 13n) disposés séquentiellement effectue un post-filtrage des paramètres de configuration reçus préfiltrés en vue de délivrer en sortie le sous-ensemble extrait par filtrage de paramètres de configuration.

6. Réseau avionique (100) selon la revendication 5, le dispositif de commande de filtrage (14) étant connecté à chaque étage de filtrage des paramètres des au moins deux étages de filtrage des paramètres (13a ; 13b ; 13n) disposés séquentiellement et étant conçu pour modifier dynamiquement et indépendamment les uns des autres les réglages de sélection des au moins deux étages de filtrage des paramètres (13a ; 13b ; 13n) disposés séquentiellement en vue du préfiltrage et du post-filtrage.

7. Réseau avionique (100) selon l'une des revendications 1 à 6, un ou plusieurs composants avioniques (50) de la pluralité de composants avioniques (50) possédant un module de communication sans fil (30), lequel est conçu pour communiquer sans fil des paramètres de configuration à une interface de données de configuration sans fil (12) du dispositif de surveillance de configuration (10).

8. Réseau avionique (100) selon l'une des revendications 1 à 7, les paramètres de configuration reçus possédant des numéros d'identification des composants avioniques (50), des certificats de sécurité des composants avioniques (50), des profils de consommation de puissance des composants avioniques (50), des profils de trafic de réseau des composants avioniques (50), des valeurs d'atténuation du câblage des composants avioniques (50) et/ou la position de montage de composants avioniques (50) dans un aéronef (A).

9. Réseau avionique (100) selon l'une des revendications 1 à 8, les composants avioniques (50) possédant des appareils de gestion de cabine, des offices de cabine d'aéronef, des éléments d'éclairage de cabine d'aéronef, des appareils électroniques de siège d'aéronef, des écrans d'affichage de cabine, des appareils de dispositif de cuisine de bord, des installations audio de cabine et/ou des unités de service des passagers.

10. Aéronef (A) comprenant un réseau avionique (100) selon l'une des revendications 1 à 9.

11. Procédé (M) pour vérifier la configuration d'un réseau avionique (100), comprenant :
détermination (M1) d'une pluralité de paramètres de configuration, lesquels caractérisent l'état de fonctionnement d'une pluralité de composants avioniques (50) ;
communication (M2) de la pluralité de paramètres de configuration à une interface de configuration (11 ; 12) d'un dispositif de surveillance de configuration (10) ; **caractérisé par**
extraction par filtrage (M4) d'un sous-ensemble de paramètres de configuration à partir de la pluralité reçue de paramètres de configuration dans un dispositif de filtrage des paramètres (13) du dispositif de surveillance de configuration (10), les paramètres de configuration du sous-ensemble étant sélectionnés de manière à rendre possible une détermination de la configuration totale du réseau avionique (100) ; et
comparaison (M5), par un dispositif de comparaison de paramètres (15) du dispositif de surveillance de configuration (10), du sous-ensemble de paramètres de configuration extraits par filtrage par le dispositif de filtrage des paramètres (13) avec un jeu de valeurs de référence mémorisées dans une mémoire de paramètres de référence (16) du dispositif de surveillance de configuration (10) pour les paramètres de configuration du sous-ensemble afin de déterminer la configuration totale du réseau avionique (100).

12. Procédé (M) selon la revendication 11, comprenant en outre :
modification (M3), par un dispositif de commande de filtrage (14) du dispositif de surveillance de configuration (10), des réglages de sélection du dispositif de filtrage des paramètres (13) en vue de sélectionner les paramètres de configuration qui sont inclus dans le sous-ensemble.

13. Procédé (M) selon la revendication 12, la modification (M3) des réglages de sélection du dispositif de filtrage des paramètres (13) s'effectuant en fonction d'un signal de commande de sélection du dispositif de comparaison de paramètres (15).

14. Procédé (M) selon la revendication 13, la comparaison (M5) comprenant en outre un calcul d'une sélectivité du sous-ensemble actuellement filtré de paramètres de configuration déterminés en vue de différencier entre les états de configuration totale souhaités et non souhaités du réseau avionique (100), et la modification (M3) comprenant en outre un renvoi de rétroaction de la sélectivité au dispositif de commande de filtrage (14) par le biais du signal de commande de sélection.

15. Procédé (M) selon l'une des revendications 12 à 14, le dispositif de filtrage des paramètres (13) possédant au moins deux étages de filtrage des paramètres (13a ; 13b ; 13n) disposés séquentiellement, de sorte que le filtrage (M4) du sous-ensemble de paramètres de configuration reçus comprend un préfiltrage des paramètres de configuration reçus dans un premier étage de filtrage des paramètres des au moins deux étages de filtrage des paramètres (13a ; 13b ; 13n) disposés séquentiellement et un post-filtrage des paramètres de configuration reçus préfiltrés dans un deuxième étage de filtrage des paramètres des au moins deux étages de filtrage des paramètres (13a ; 13b ; 13n) disposés séquentiellement en vue de délivrer en sortie le sous-ensemble extrait par filtrage de paramètres de configuration.
